# EUROPÄISCHE PATENTSCHRIFT

(11) **EP 2 986 840 B1**
(45) Veröffentlichungstag und Bekanntmachung des Hinweises auf die Patenterteilung: **11.04.2018**
(21) Anmeldenummer: 14705335.9
(22) Anmeldetag: 18.02.2014
(51) Int. Cl.: F02M 51/06, F16K 31/06

(54) **MAGNETVENTIL MIT VERBESSERTEM ÖFFNUNGS- UND SCHLIESSVERHALTEN**
SOLENOID VALVE WITH IMPROVED OPENING AND CLOSING CHARACTERISTICS
ÉLECTROVANNE AVEC DES AMÉLIORATIONS DU COMPORTEMENT D'OUVERTURE ET DE FERMERTURE

(30) Priorität: 17.04.2013 DE 102013206959
(43) Veröffentlichungstag der Anmeldung: 24.02.2016
(73) Patentinhaber: Robert Bosch GmbH, 70442 Stuttgart (DE)
(72) Erfinder: KROMER, Ralf, 71665 Vaihingen (DE)
(86) Internationale Anmeldenummer: PCT/EP2014/053083
(87) Internationale Veröffentlichungsnummer: WO 2014/170048

(56) Entgegenhaltungen:
- EP-A1- 2 320 066
- WO-A1-2009/054848
- DE-A1- 4 442 190
- DE-A1- 19 808 067
- JP-A- 2005 307 750

## Beschreibung

### Stand der Technik

Die vorliegende Erfindung betrifft ein Magnetventil zum Steuern von Fluiden, insbesondere von Kraftstoff, mit verbessertem Öffnungsverhalten und gleichzeitig auch verbessertem Schließverhalten.

Magnetventile sind beispielsweise als Einspritzventile aus dem Stand der Technik in unterschiedlichen Ausgestaltungen bekannt. Es hat sich herausgestellt, dass Magneteinspritzventile, welche im Bereich des Ankers im Gehäuse eine magnetische Trennung, d.h., einen unmagnetischen Bereich, haben, unter denselben Bedingungen schneller öffnen können als Ventile ohne eine derartige Trennung des Magnetkreises. Allerdings werden durch die Trennung des Magnetkreises die Schließzeiten verschlechtert. Hierbei wurde schon eine magnetische Drossel vorgeschlagen, welche in den Bereich der magnetischen Trennung eingebracht ist, derart, dass die magnetische Drossel und die magnetische Trennung als einstückiges Bauteil gebildet sind. Dieses Bauteil wird mittels eines Zweikomponenten-MIM-Prozesses hergestellt. Ein derartiger Herstellungsprozess ist jedoch relativ aufwendig und teuer, so dass es wünschenswert wäre, hier eine einfachere und verbesserte Lösung zu haben.

### Offenbarung der Erfindung

Das erfindungsgemäße Magnetventil zum Steuern von Fluiden mit den Merkmalen des Anspruches 1 weist demgegenüber den Vorteil auf, dass sowohl die Öffnungszeiten als auch die Schließzeiten des Magnetventils verbessert werden können und das Magnetventil dabei insbesondere besonders einfach und kostengünstig herstellbar ist. Dadurch ist insbesondere ein Einsatz in einer Massenfertigung möglich. Dies wird erfindungsgemäß dadurch erreicht, dass das Magnetventil einen Magnetkreis mit einem Anker, einem Innenpol und einem Magnetrückschluss aufweist. Dabei umfasst der Magnetkreis ein unmagnetisches Trennelement zur Unterbrechung des Magnetkreises und eine magnetische Drosselvorrichtung, welche den Magnetkreis am unmagnetischen Trennelement schließt. Die magnetische Drosselvorrichtung hat somit die Wirkung eines magnetischen Bypasses, welcher am unmagnetischen Trennelement angeordnet ist. Dabei ist die magnetische Drosselvorrichtung als separates Einzelbauteil vorgesehen, welches mittels einer formschlüssigen und/oder kraftschlüssigen Verbindung fixiert ist. Dadurch kann die magnetische Drosselvorrichtung als kostengünstig herstellbares Einzelbauteil vorgesehen werden und eine Montage der magnetischen Drosselvorrichtung kann einfach und schnell erfolgen. Beispielsweise kann die magnetischen Drosselvorrichtung mittels einer Klemmverbindung fixiert sein, so dass die magnetische Drosselvorrichtung einfach und schnell durch Klemmen montierbar und auch leicht demontierbar ist.

Die Unteransprüche zeigen bevorzugte Weiterbildungen der Erfindung.

Vorzugsweise ist die magnetische Drosselvorrichtung radial außerhalb des unmagnetischen Trennelements angeordnet. Dadurch kann die magnetische Drosselvorrichtung einfach, beispielsweise auf das unmagnetische Trennelement, aufgeklemmt werden.

Weiter bevorzugt ist die magnetische Drosselvorrichtung eine magnetische Hülse. Eine magnetische Drosselvorrichtung in Form einer Hülse kann ebenfalls sehr einfach und schnell montiert werden, indem beispielsweise die magnetische Hülse auf das unmagnetische Trennelement aufgeschoben wird und dabei eine formschlüssige und/oder kraftschlüssige Verbindung hergestellt wird. Besonders bevorzugt ist die Hülse zylindrisch, oder alternativ ist die Hülse im Querschnitt ein Polygon.

Gemäß einer weiteren bevorzugten Alternative der vorliegenden Erfindung ist die magnetische Drosselvorrichtung vorzugsweise ein streifenförmiges Element aus magnetischem Material oder die Drosselvorrichtung umfasst eine Vielzahl von streifenförmigen Elementen aus magnetischem Material.

Besonders bevorzugt weist das streifenförmige Element eine erste Umformung an einem ersten Ende auf, welche mit dem Magnetrückschluss in Kontakt ist und/oder das streifenförmige Element weist eine zweite Umformung an einem zweiten Ende, welche mit dem Innenpol in Kontakt ist, auf. Das streifenförmige Element weist besonders bevorzugt die Form eines Blechstreifens aus magnetischem Material auf.

Weiter bevorzugt ist für eine möglichst schnelle Schließzeit eine Querschnittsfläche des unmagnetischen Trennelements größer als eine Querschnittsfläche der magnetischen Drosselvorrichtung.

Besonders bevorzugt liegt das unmagnetische Trennelement direkt an einer Außenfläche der magnetischen Drosselvorrichtung an.

Das erfindungsgemäße Magnetventil wird besonders bevorzugt als Kraftstoffeinspritzventil zur Direkteinspritzung bei Brennkraftmaschinen verwendet.

### Kurze Beschreibung der Zeichnung

Nachfolgend werden bevorzugte Ausführungsbeispiele der Erfindung unter Bezugnahme auf die begleitende Zeichnung im Detail beschrieben. In der Zeichnung bezeichnen gleiche bzw. funktional gleiche Teile jeweils gleiche Bauteile. In der Zeichnung ist:
- Figur 1: eine schematische Schnittansicht eines Magnetventils gemäß einem ersten Ausführungsbeispiel der Erfindung,
- Figur 2: eine schematische, perspektivische Teilansicht des Magnetventils von Figur 1,
- Figur 3: eine schematische Schnittansicht eines Magnetventils gemäß einem zweiten Ausführungsbeispiel der Erfindung, und
- Figur 4: eine schematische, perspektivische Teilansicht des Magnetventils von Figur 3.

### Bevorzugte Ausführungsformen der Erfindung

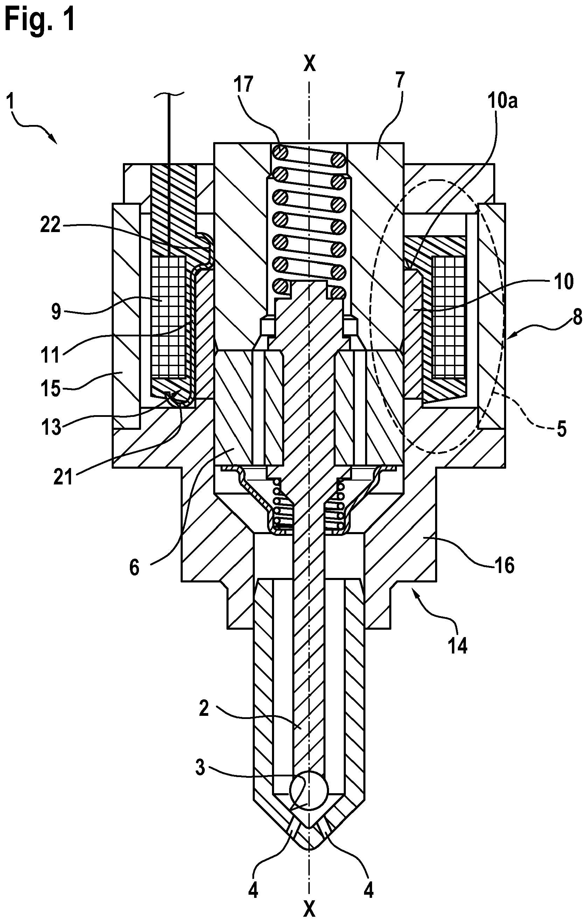

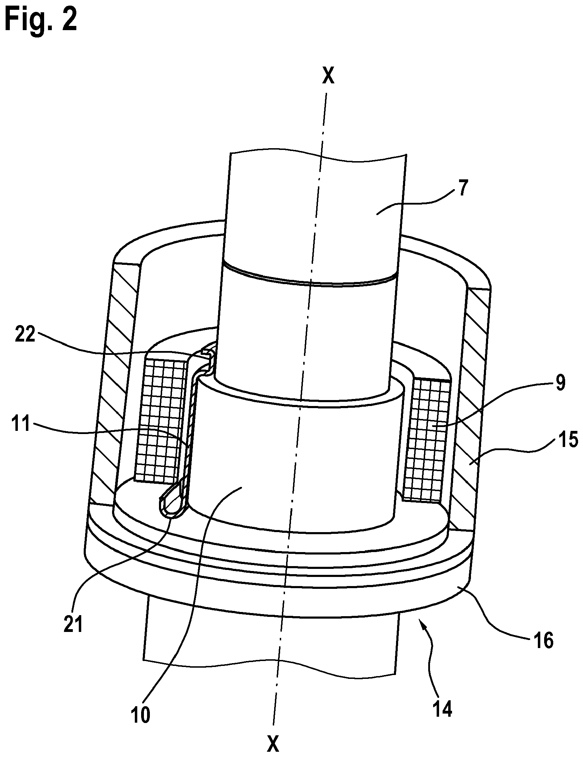

Nachfolgend wird unter Bezugnahme auf die Figuren 1 und 2 ein Magnetventil 1 zum Steuern eines Fluids im Detail beschrieben.
Wie aus Figur 1 ersichtlich ist, umfasst das Magnetventil 1 ein Schließelement 2 in Form einer Ventilnadel, welche Auslassöffnungen 4 an einem Ventilsitz 3 freigibt und verschließt.
Das Magnetventil 1 umfasst ferner einen Magnetkreis 5 mit einem Anker 6, einem Innenpol 7 und einem Magnetrückschluss 8. Der Magnetrückschluss 8 ist in diesem Ausführungsbeispiel ein Teil eines Gehäuses 14 des Magnetventils, wobei das Gehäuse 14 mehrteilig ausgebildet ist. Hierbei sind die Gehäuseteile 15, 16 Teile des Magnetkreises 5.
Das Magnetventil 1 umfasst ferner eine Spule 9, welche bei Bestromung den Anker 6 anzieht. Nach Beendigung einer Bestromung der Spule 9 stellt ein Rückstellelement 17 den Anker 6 wieder in die Ausgangsposition zurück. Figur 1 zeigt dabei den geöffneten Zustand des Magnetventils 1, in welchem der Anker 6 am Innenpol 7 anliegt. Der Anker 6 ist in bekannter Weise mit dem Schließelement 2 verbunden, um die Hubbewegung des Schließelements zu bewirken.
Der Magnetkreis 5 des Magnetventils 1 umfasst ferner ein unmagnetisches Trennelement 10, welches eine Hülse ist. Das unmagnetische Trennelement 10 stellt sicher, dass bei Betätigung der Spule der Magnetkreis schnell über den Anker 6 geschlossen wird, so dass eine sehr schnelle Öffnungszeit erreicht wird. Das unmagnetische Trennelement 10 ist allerdings problematisch hinsichtlich der Schließzeiten des Magnetventils 1, welche sich durch das unmagnetische Trennelement 10 vergrößern.
Daher ist erfindungsgemäß eine magnetische Drosselvorrichtung 13 vorgesehen, welche eine Verbindung zwischen dem Gehäuse 14, genauer dem Gehäuseteil 16, und dem Innenpol 7 herstellt.
Wie aus den Figuren 1 und 2 ersichtlich ist, umfasst die magnetische Drosselvorrichtung 13 in diesem Ausführungsbeispiel mehrere streifenförmige

Elemente 11 und das unmagnetische Trennelement 10 ist eine zylindrische Hülse. In diesem Ausführungsbeispiel sind drei gleiche streifenförmige Elemente 11 vorgesehen, die entlang des Umfangs gleich verteilt sind.

Die streifenförmigen Elemente 11 weisen an einem ersten Ende eine erste Umformung 21 und an einem zweiten Ende eine zweite Umformung 22 auf. Die beiden Umformungen sind im Schnitt ungefähr U-förmig ausgebildet. Dabei ist die erste Umformung 21 mit dem Gehäuse 14 in Kontakt und die zweite Umformung 22 ist mit dem Innenpol 7 in Kontakt. Ferner liegen die streifenförmigen Elemente 11 direkt auf einer Außenfläche des unmagnetischen Trennelements 10 auf (vgl. Figur 1).

Durch das Vorsehen der streifenförmigen magnetischen Drosselvorrichtung 13 wird somit eine magnetische Überbrückung des unmagnetischen Trennelements 10 erreicht. Dies hat die Wirkung, dass sich die Schließzeiten des Magnetventils signifikant verbessern, ohne dass sich dadurch die schnellen Öffnungszeiten des Magnetventils verschlechtern. Ein Querschnitt des unmagnetischen Trennelements 10 ist dabei um ein Vielfaches größer als ein Querschnitt der magnetischen Drosselvorrichtung 13. Hierbei kann erfindungsgemäß die magnetische Drosselvorrichtung 13 sehr einfach und kostengünstig bereitgestellt werden. Beispielsweise können die streifenförmigen Elemente 11 aus einem Blechmaterial aus magnetischem Werkstoff ausgestanzt werden.

Weiterhin wird die magnetische Drosselvorrichtung 13 nur durch formschlüssige und/oder kraftschlüssige Verbindungen mit dem Magnetrückschluss bzw. dem Innenpol 7 verbunden. Bei dem in Figur 1 gezeigten Ausführungsbeispiel wird das streifenförmige Element 11 zwischen dem Gehäuseteil 16 und einer Stirnseite 10a des magnetischen Trennelements eingeklemmt. Durch die U-förmige Gestaltung der zweiten Umformung 22 am streifenförmigen Element 11 wird ein Kontakt zwischen dem streifenförmigen Element 11 und dem Innenpol 7 an dessen äußerer Mantelfläche hergestellt. Somit kann erfindungsgemäß die magnetische Drosselvorrichtung 13 durch Klemmen schnell und kostengünstig fixiert werden.

Durch die Ausgestaltung des streifenförmigen Elements 11 mit einer ersten und zweiten Umformung 21, 22 an den beiden Enden kann eine Abstützung des streifenförmigen Elements 11 derart erreicht werden, dass sich das streifenförmige Element 11 in Axialrichtung X-X am Gehäuseteil 16 federnd abstützt und an der zweiten Umformung 22 in Radialrichtung am Innenpol 7 federnd abstützt.

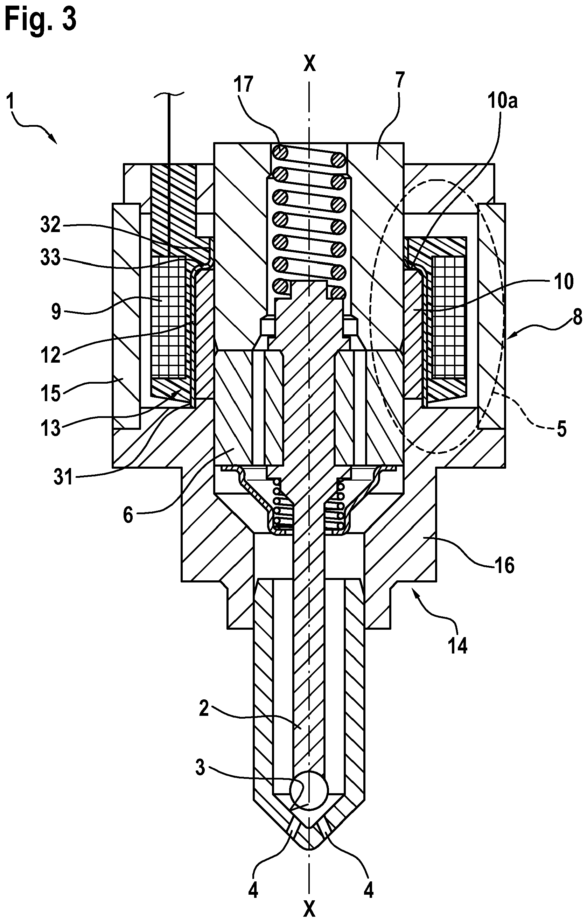

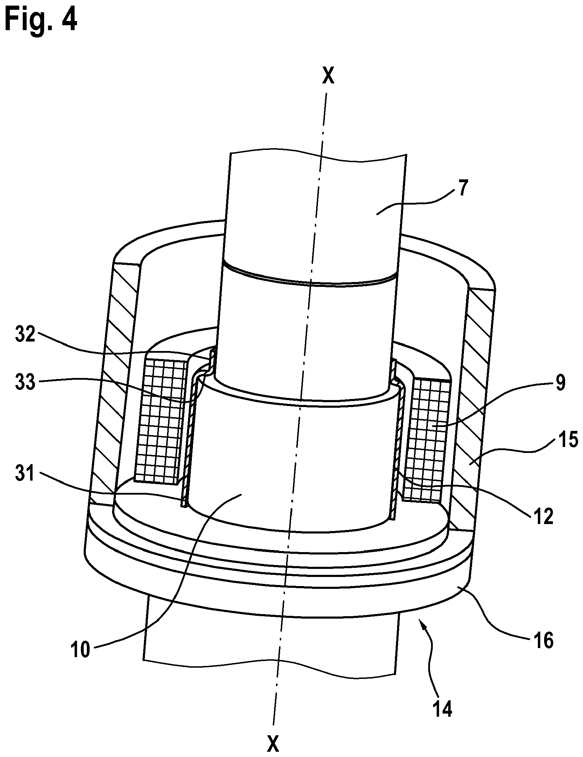

Die Figuren 3 und 4 zeigen ein Magnetventil 1 gemäß einem zweiten Ausführungsbeispiel der Erfindung. Wie insbesondere aus Figur 4 ersichtlich ist, ist die magnetische Drosselvorrichtung 13 des zweiten Ausführungsbeispiels eine Hülse 12 aus magnetischem Material. Die Hülse 12 ist zylindrisch aufgebaut und ist auf das unmagnetische Trennelement 10 aufgepresst. Die Hülse 12 weist ein erstes Ende 31 auf, welches zylindrisch wie ein Mittelbereich der Hülse 12 gebildet ist und sich mit dem Gehäuseteil 16 in Kontakt befindet. Das zweite Ende 32 ist als zylindrische Einschnürung ausgebildet, so dass die Hülse einen Absatz 33 aufweist, wobei das zweite Ende 32 sich mit dem Innenpol 7 in Kontakt befindet. Der Absatz 33 liegt dabei an der Stirnseite 10a des unmagnetischen Trennelements 10 an. Somit weist auch dieses Ausführungsbeispiel eine formschlüssige und kraftschlüssige Verbindung zwischen dem unmagnetischen Trennelement 10 und der als Hülse ausgebildeten magnetischen Drosselvorrichtung 13 auf. Hierdurch kann erfindungsgemäß durch eine kostengünstig herstellbare und schnell und leicht montierbare Hülse 12 ebenfalls ein Magnetventil mit hervorragenden Öffnungs- und Schließzeiten bereitgestellt werden.

Zum zweiten Ausführungsbeispiel der Figuren 3 und 4 sei noch angemerkt, dass statt einer zylindrischen Hülse 12 auch eine polygone Hülse, beispielsweise eine achteckige oder zehneckige Hülse, verwendet werden kann.

## Patentansprüche

1. Magnetventil zum Steuern von Fluiden, umfassend:
- ein Schließelement (2), welches an einem Ventilsitz (3) wenigstens eine Auslassöffnung freigibt und verschließt,
- einen Magnetkreis (5) mit einem Anker (6), einem Innenpol (7) und einem Magnetrückschluss (8), und
- eine Spule (9),
- wobei der Anker (6) mit dem Schließelement (2) zusammenwirkt,
- wobei der Magnetkreis (5) ein unmagnetisches Trennelement (10) zur Unterbrechung des Magnetkreises (5) und eine magnetische Drosselvorrichtung (13) umfasst,
**dadurch gekennzeichnet,**
**dass** das unmagnetische Trennelement (10) eine den Innenpol (7) und den Anker (6) umgebende Hülse ist und die magnetische Drosselvorrichtung (13) den Magnetkreis (5) am unmagnetischen Trennelement (10) schließt,
- wobei die magnetische Drosselvorrichtung (13) ein separates Einzelbauteil ist, welches mittels einer formschlüssigen und/oder kraftschlüssigen Verbindung fixiert ist.

2. Magnetventil nach Anspruch 1, **dadurch gekennzeichnet, dass** die magnetische Drosselvorrichtung (13) radial außerhalb des unmagnetischen Trennelements (10) angeordnet ist.

3. Magnetventil nach einem der vorhergehenden Ansprüche, **dadurch gekennzeichnet, dass** die magnetische Drosselvorrichtung (13) eine magnetische Hülse (12) ist.

4. Magnetventil nach Anspruch 3, **dadurch gekennzeichnet, dass** die magnetische Hülse (12) einen zylindrischen Querschnitt oder einen polygonen Querschnitt aufweist.

5. Magnetventil nach Anspruch 1 oder 2, **dadurch gekennzeichnet, dass** die magnetische Drosselvorrichtung (13) ein einziges streifenförmiges Element (11) aus magnetischem Material oder eine Vielzahl von streifenförmigen Elementen (11) aus magnetischem Material umfasst.

6. Magnetventil nach Anspruch 5, **dadurch gekennzeichnet, dass** das streifenförmige Element (11) eine erste Umformung (21) an einem ersten Ende aufweist, welche mit dem Magnetrückschluss (8) in Kontakt ist und/oder eine zweite Umformung (22) an einem zweiten Ende umfasst, welche mit dem Innenpol (7) in Kontakt ist.

7. Magnetventil nach einem der vorhergehenden Ansprüche, **dadurch gekennzeichnet, dass** ein erstes Ende der magnetischen Drosselvorrichtung (13) mit dem Magnetrückschluss (8) in Kontakt ist und ein zweites Ende der magnetischen Drosselvorrichtung (13) mit dem Innenpol (7) in Kontakt ist.

8. Magnetventil nach einem der vorhergehenden Ansprüche, **dadurch gekennzeichnet, dass** eine Querschnittsfläche des unmagnetischen Trennelements (10) größer ist als eine Querschnittsfläche der magnetischen Drosselvorrichtung (13).

9. Magnetventil nach einem der vorhergehenden Ansprüche, **dadurch gekennzeichnet, dass** die magnetische Drosselvorrichtung (13) direkt an einer Außenfläche des unmagnetischen Trennelements (10) anliegt.

## Claims

1. Solenoid valve for controlling fluids, comprising:
- a closure element (2) which opens up and closes off at least one outlet opening at a valve seat (3),
- a magnetic circuit (5) with an armature (6), an inner pole (7) and a magnetic return (8), and
- a coil (9),
- wherein the armature (6) interacts with the closure element (2),
- wherein the magnetic circuit (5) comprises a non-magnetic separating element (10) for breaking the magnetic circuit (5), and a magnetic throttling device (13),
**characterized**
**in that** the non-magnetic separating element (10) is a sleeve which surrounds the inner pole (7) and the armature (6), and the magnetic throttling device (13) closes the magnetic circuit (5) at the non-magnetic separating element (10),
- wherein the magnetic throttling device (13) is a separate individual component which is fixed by means of a form-fitting and/or force-fitting connection.

2. Solenoid valve according to Claim 1, **characterized in that** the magnetic throttling device (13) is arranged radially outside the non-magnetic separating element (10).

3. Solenoid valve according to either of the preceding claims, **characterized in that** the magnetic throttling device (13) is a magnetic sleeve (12).

4. Solenoid valve according to Claim 3, **characterized in that** the magnetic sleeve (12) has a cylindrical cross section or a polygonal cross section.

5. Solenoid valve according to Claim 1 or 2, **characterized in that** the magnetic throttling device (13) comprises a single, strip-shaped element (11) composed of magnetic material or a multiplicity of strip-shaped elements (11) composed of magnetic material.

6. Solenoid valve according to Claim 5, **characterized in that** the strip-shaped element (11) has a first deformed portion (21) at a first end, which portion is in contact with the magnetic return (8), and/or comprises a second deformed portion (22) at a second end, which portion is in contact with the inner pole (7).

7. Solenoid valve according to one of the preceding claims, **characterized in that** a first end of the magnetic throttling device (13) is in contact with the magnetic return (8), and a second end of the magnetic throttling device (13) is in contact with the inner pole (7).

8. Solenoid valve according to one of the preceding claims, **characterized in that** a cross-sectional area of the non-magnetic separating element (10) is larger than a cross-sectional area of the magnetic throttling device (13).

9. Solenoid valve according to one of the preceding claims, **characterized in that** the magnetic throttling device (13) bears directly against an outer surface of the non-magnetic separating element (10).

## Revendications

1. Electrovanne pour la commande de fluides, comprenant:
- un élément de fermeture (2), qui libère et ferme au moins un orifice de sortie à un siège de soupape (3),
- un circuit magnétique (5) avec un induit (6), un pôle intérieur (7) et une culasse magnétique (8), et
- une bobine (9),
- dans laquelle l'induit (6) coopère avec l'élément de fermeture (2),
- dans laquelle le circuit magnétique (5) comprend un élément de séparation amagnétique (10) pour l'interruption du circuit magnétique (5) et un dispositif d'arrêt magnétique (13),
**caractérisée en ce que**
- l'élément de séparation amagnétique (10) est une douille entourant le pôle intérieur (7) et l'induit (6) et le dispositif d'arrêt magnétique (13) ferme le circuit magnétique (5) à l'élément de séparation amagnétique (10),
- dans laquelle le dispositif d'arrêt magnétique (13) est un composant individuel séparé, qui est fixé au moyen d'un assemblage par emboîtement et/ou par adhérence.

2. Electrovanne selon la revendication 1, **caractérisée en ce que** le dispositif d'arrêt magnétique (13) est disposé radialement à l'extérieur de l'élément de séparation amagnétique (10).

3. Electrovanne selon l'une quelconque des revendications précédentes, **caractérisée en ce que** le dispositif d'arrêt magnétique (13) est une douille magnétique (12).

4. Electrovanne selon la revendication 3, **caractérisée en ce que** la douille magnétique (12) présente une section transversale cylindrique ou une section transversale polygonale.

5. Electrovanne selon la revendication 1 ou 2, **caractérisée en ce que** le dispositif d'arrêt magnétique (13) comprend un seul élément en forme de bande (11) en matériau magnétique ou une multiplicité d'éléments en forme de bandes (11) en matériau magnétique.

6. Electrovanne selon la revendication 5, **caractérisée en ce que** l'élément en forme de bande (11) présente à une première extrémité une première déformation (21), qui est en contact avec la culasse magnétique (8) et/ou comprend à une deuxième extrémité une deuxième déformation (22), qui est en contact avec le pôle intérieur (7).

7. Electrovanne selon l'une quelconque des revendications précédentes, **caractérisée en ce qu'**une première extrémité du dispositif d'arrêt magnétique (13) est en contact avec la culasse magnétique (8) et une deuxième extrémité du dispositif d'arrêt magnétique (13) est en contact avec le pôle intérieur (7).

8. Electrovanne selon l'une quelconque des revendications précédentes, **caractérisée en ce qu'**une aire de section transversale de l'élément de séparation amagnétique (10) est plus grande qu'une aire de section transversale du dispositif d'arrêt magnétique (13).

9. Electrovanne selon l'une quelconque des revendications précédentes, **caractérisée en ce que** le dispositif d'arrêt magnétique (13) s'applique directement sur une face extérieure de l'élément de séparation amagnétique (10).
